Europäisches Patentamt

European Patent Office

Office européen des brevets

(19)

(11) Numéro de publication : **0 108 699**
**B1**

(12)

# FASCICULE DE BREVET EUROPÉEN

(45) Date de publication du fascicule du brevet :
**20.01.88**

(51) Int. Cl.⁴ : **F 24 D   3/00**, F 24 D  19/10

(21) Numéro de dépôt : **83420170.9**

(22) Date de dépôt : **03.11.83**

(54) **Procédé et installation de chauffage central bi-énergie.**

(30) Priorité : **04.11.82 FR 8218723**

(43) Date de publication de la demande :
**16.05.84 Bulletin 84/20**

(45) Mention de la délivrance du brevet :
**20.01.88 Bulletin 88/03**

(84) Etats contractants désignés :
**AT BE CH DE GB IT LI SE**

(56) Documents cités :
**EP-A- 0 042 958**
**DE-A- 2 021 579**

(73) Titulaire : **SOCIETE FINANCIERE ET COMMERCIALE DU CHABLAIS Société à responsabilité limitée**
**13 avenue de la Fontaine Couverte**
**F-74200 Thonon-les-Bains (FR)**

(72) Inventeur : **Loquineau, Jacques**
**2, avenue Saint-François de Salles**
**F-74200 Thonon Les Bains (FR)**

(74) Mandataire : **Laurent, Michel et al**
**Cabinet Michel Laurent 20 rue Louis Chirpaz B.P. 32**
**F-69131 Ecully Cédex (FR)**

Jouve. 18, rue St-Denis. 75001 Paris. France

## Description

L'invention concerne un procédé de chauffage central bi-énergie. Elle se rapporte également à une installation pour la mise en œuvre de ce procédé.

Pour le chauffage central, on a déjà proposé de coupler des chaudières électriques et des chaudières traditionnelles, notamment à combustible liquide ou gazeux. C'est ce qu'on appelle le chauffage central bi-énergie.

Le développement de l'électricité d'origine nucléaire rend de plus en plus attrayantes les tarifications des fournisseurs de courant électrique. Les nouvelles tarifications conduisent généralement à des coûts différents en fonction des périodes d'utilisation. En conséquence, il est donc de plus en plus attractif d'utiliser le chauffage électrique lorsque l'électricité est à tarification favorable et de n'utiliser la chaudière deuxième énergie seulement pendant les périodes où la tarification de l'électricité est élevée.

Or on sait par ailleurs que les périodes à tarification électrique élevée correspondent essentiellement à celles où la demande d'électricité est la plus élevée, généralement à la période des grands froids pendant les jours ouvrables. Elle est assez réduite dans une année (de l'ordre de 400 heures/an). Une solution pourrait consister à coupler une chaudière électrique à une autre chaudière traditionnelle ayant une deuxième source d'énergie sans se soucier de la puissance de la chaudière électrique. Cela serait bien évidemment très coûteux, du fait des primes fixes à souscrire. En outre, le fournisseur de courant électrique cherche à éviter la souscription de puissances élevées.

Dans le brevet DE-A-2 021 599, on a décrit une installation bi-énergie faisant appel à deux chaudières distinctes respectivement l'une électrique, l'autre à fioul, disposées en série et raccordées au circuit de chauffage central, dans laquelle la puissance de la chaudière électrique ne permet pas de couvrir tous les besoins thermiques. La mise en œuvre de l'une ou de l'autre de ces chaudières s'effectue automatiquement en fonction des besoins thermiques et de la tarification de l'énergie électrique, grâce à un système de réglage approprié commandé par une horloge, par une sonde extérieure et par trois aquastats disposés en des lieux précis. Dans cette disposition, on ne cherche pas à effacer les démarrages intempestifs ou de courte durée de la chaudière fioul, ce qui nuit au bon rendement de l'installation.

Dans le brevet EP-A-00 42 958, on a proposé une installation bi-énergie constituée par une chaudière fioul et une pompe à chaleur (PAC), dans laquelle on détecte l'insuffisance de la PAC au moyen d'une prise de température seuil de l'eau du circuit de chauffage central grâce à une sonde située sur le retour du circuit de chauffage central en amont de la PAC. Ces deux appareils fonctionnent alternativement et ont des cycles de fonctionnement ayant des durées prédéterminées. Une telle installation bi-énergie conduit à un investissement élevé du fait de la PAC. Par ailleurs, si les cycles de fonctionnement de la chaudière fioul d'une durée prédéterminée permettent d'éviter les démarrages intempestifs ou de courte durée de celle-ci, en revanche, du fait du fonctionnement alterné de la PAC et de la chaudière fioul, on ne privilégie pas l'utilisation de l'énergie électrique pendant les périodes à tarification favorable.

De plus, la combinaison des enseignements de ces deux documents ne permet pas de faire fonctionner une installation bi-énergie composée d'une chaudière fioul et d'une chaudière électrique dans les conditions les plus économiques en fonction des besoins thermiques et de la tarification de l'énergie électrique, car elle n'enseigne ni les conditions opératoires permettant d'utiliser l'énergie électrique de façon prioritaire et économique pendant les périodes à tarification favorable de l'électricité, ni l'optimisation du fonctionnement simultané des deux chaudières lorsque, du fait de la limitation de la puissance de la chaudière électrique, la chaudière fioul doit apporter le complément de puissance nécessaire pour satisfaire les besoins thermiques de l'installation de chauffage.

L'invention pallie ces inconvénients. Elle concerne un procédé de chauffage central bi-énergie qui soit économique à installer et à utiliser et qui permette de s'équiper avec une chaudière électrique de puissance réduite et ce, dans des conditions néanmoins très économiques.

Ce procédé de chauffage central bi-énergie, dont le circuit comporte des radiateurs, un circulateur, un thermostat d'ambiance et une vanne de mélange, du type dans lequel on utilise deux chaudières reliées en série au circuit de chauffage central, à savoir :

une chaudière électrique équipée de résistances électriques et d'un premier aquastat qui provoque, pendant les périodes à tarification favorable de l'électricité, la mise en service (ou l'arrêt) des résistances pour des températures de l'eau du circuit de chauffage Tee (pour l'enclenchement) et Tce (pour l'arrêt) ;

une chaudière fonctionnant sur une énergie différente de l'électricité, dite chaudière deuxième énergie, équipée d'un brûleur et d'un second aquastat qui limite la température de l'eau au départ de cette chaudière deuxième énergie, et qui, pendant les périodes à tarification élevée de l'électricité où cette chaudière fonctionne seule, provoque la mise en service (ou l'arrêt) du brûleur de cette chaudière ;

et dans lequel ces deux chaudières sont pilotées par un coffret électrique de commande raccordé auxdits aquastats, au brûleur, aux résistances, au circulateur et à un système de détection du changement de tarification de l'énergie électrique et qui comprend un équipement permettant de définir et de prendre en considération une constante de temps t prédéterminée, procédé dans lequel :

d'une part, la mise en fonctionnement de l'une ou de l'autre de ces deux chaudières est effectuée automatiquement en fonction de la tarification de l'énergie électrique détectée par le système et par l'évolution des besoins thermiques du circuit de chauffage détectée par lesdits aquastats en fonction de la température de l'eau du circuit de chauffage ;

d'autre part, la puissance de la chaudière électrique ne permet pas de couvrir tous les besoins thermiques pendant la période où l'électricité est à tarification favorable, alors que la puissance de la chaudière deuxième énergie est à même de couvrir la totalité des besoins thermiques pendant les jours les plus froids ;

et enfin, on enclenche, ou non, la chaudière deuxième énergie qu'après ladite durée prédéterminée t,

caractérisé en ce que pendant les périodes à tarification favorable de l'électricité :

tout d'abord, on enclenche la chaudière deuxième énergie ensemble avec la chaudière électrique lorsque, après cette durée prédéterminée t, la température de l'eau du circuit de chauffage détectée par un troisième aquastat situé sur le départ de la chaudière électrique agissant sur le brûleur de la chaudière deuxième énergie par le biais du coffret, est inférieure ou égale à une température seuil prédéterminée T, elle-même inférieure :

d'une part, à la température de l'eau du circuit de chauffage Tee provoquant l'enclenchement des résistances de la chaudière électrique détectée par le premier aquastat,

d'autre part, à la température de l'eau du circuit de chauffage provoquant l'enclenchement de la chaudière deuxième énergie détectée par le deuxième aquastat ;

puis, à partir du moment (F) où cette chaudière deuxième énergie a été ainsi mise en service, on arrête le brûleur de cette chaudière deuxième énergie par le biais du coffret, lorsque le troisième aquastat détecte au départ de la chaudière électrique une température de l'eau Tcf pour laquelle il provoque l'arrêt du brûleur de la chaudière deuxième énergie, cette température étant inférieure :

à la température de l'eau Tce provoquant l'arrêt des résistances de la chaudière électrique détectée par le premier aquastat,

. et à la température de l'eau provoquant l'arrêt du brûleur de la chaudière deuxième énergie détectée par le second aquastat ;

puis, si après que cette chaudière deuxième énergie ait été ainsi arrêtée, la température de l'eau redescend sans qu'il y ait eu au préalable arrêt de la chaudière électrique, on remet à nouveau en route par le biais du troisième aquastat et du coffret la chaudière deuxième énergie lorsque la température seuil T est atteinte sans prendre en compte ladite durée prédéterminée t ;

enfin, toujours lorsque l'on est sur tarification électrique favorable, lorsque la chaudière deuxième énergie, après avoir été remise en service puis arrêtée, lorsque la température de l'eau au départ de la chaudière électrique atteint sa température de coupure Tce, le premier aquastat provoque l'arrêt du fonctionnement des résistances, à partir de cette situation et de ce moment, la chaudière deuxième énergie ne peut plus être remise en service par le biais du coffret lorsque la température seuil T est atteinte que si après la durée prédéterminée t la température de l'eau du circuit de chauffage au droit du troisième aquastat est toujours inférieure ou égale à cette température seuil T.

L'invention concerne également une installation pour la mise en œuvre de ce procédé. Cette installation de chauffage central bi-énergie qui comprend :

un circuit de chauffage central proprement dit avec ses radiateurs, un circulateur, un thermostat d'ambiance et une vanne de mélange ;

une chaudière électrique équipée de résistances électriques et d'un premier aquastat qui, pendant la période à tarification favorable de l'électricité, provoque la mise en service ou l'arrêt des résistances de cette chaudière électrique pour des températures de l'eau du circuit de chauffage Tee (enclenchement) ou Tce (coupure) ;

une chaudière deuxième énergie raccordée en série à la chaudière électrique, équipée d'un brûleur et d'un deuxième aquastat qui limite la température de l'eau au départ de cette chaudière deuxième énergie, et qui, pendant les périodes à tarification élevée de l'électricité, provoque la mise en service ou l'arrêt du brûleur de cette chaudière deuxième énergie ;

un coffret électrique raccordé aux premier et deuxième aquastats, aux résistances, au brûleur, au circulateur et à un système de détection du changement de tarification de l'énergie électrique, ce coffret comportant des moyens aptes :

à fixer une durée prédéterminée t,

à détecter, à la fin de cette durée prédéterminée t, si au départ de la chaudière électrique, on a atteint une température inférieure ou égale à la température seuil T prédéterminée,

caractérisée :

— d'une part, en ce qu'elle comporte un troisième aquastat, raccordé au coffret, disposé sur le départ de la chaudière électrique pour détecter :

tout d'abord, une température seuil T de l'eau du circuit de chauffage de mise en œuvre du brûleur de la chaudière deuxième énergie inférieure :

d'une part, à la température d'arrêt Tce des résistances de la chaudière électrique détectée par le premier aquastat de cette chaudière.

d'autre part, à la température de l'eau provoquant l'arrêt du brûleur de la chaudière deuxième énergie détectée par son aquastat ;

et également une température de l'eau Tcf provoquant l'arrêt du brûleur de la chaudière deuxième énergie :

supérieure de quelques degrés à la température seuil T, mais inférieure à la température de l'eau Tce provoquant l'arrêt des résistances de la chaudière électrique détectée par le premier aquastat de la chaudière électrique,

et également inférieure à la température de l'eau provoquant l'arrêt du brûleur de la chaudière deuxième énergie détectée par son aquastat ;

— et d'autre part, en ce que ledit coffret est alimenté électriquement en permanence par les fils de phase et neutre et comporte :

un contact commandé par le relais installé sur le tableau du fournisseur de courant électrique, ouvert en tarification défavorable de l'électricité et fermé en tarification favorable ;

un relais mis sous tension pendant la période à tarification favorable de l'électricité dont les contacts :

en position fermée, permettent la mise sous tension : des résistances de la chaudière électrique lorsque le premier aquastat est fermé, et de la temporisation lorsque le contact du troisième aquastat est fermé,

en position ouverte, permettent l'alimentation du relais de commande du brûleur de la chaudière deuxième énergie lorsque le contact du deuxième aquastat est fermé ;

un relais temporisé qui, en période à tarification favorable de l'électricité, est mis sous tension lorsque le contact du troisième aquastat est fermé et qui provoque, après la durée T, la fermeture de son contact mettant ainsi sous tension un relais lorsque le contact du premier aquastat est fermé ;

un relais de simultanéité qui lors de sa mise sous tension provoque la fermeture de son contact permettant ainsi la mise sous tension du relais du brûleur de la chaudière deuxième énergie lorsque le contact du deuxième aquastat est fermé ;

un relais qui met sous tension les résistances de la chaudière électrique lorsque simultanément les contacts du relais et du premier aquastat sont fermés.

La manière dont l'invention peut être réalisée et les avantages qui en découlent ressortiront mieux des exemples de réalisation qui suivent donnés à titre indicatif et non limitatif à l'appui des figures annexées.

La figure 1 est une représentation schématique sommaire d'une installation préférée pour la mise en œuvre de l'invention.

La figure 2 est une représentation du schéma électrique du circuit de commande.

Les figures 3 à 5 illustrent les modes de fonctionnement de cette installation.

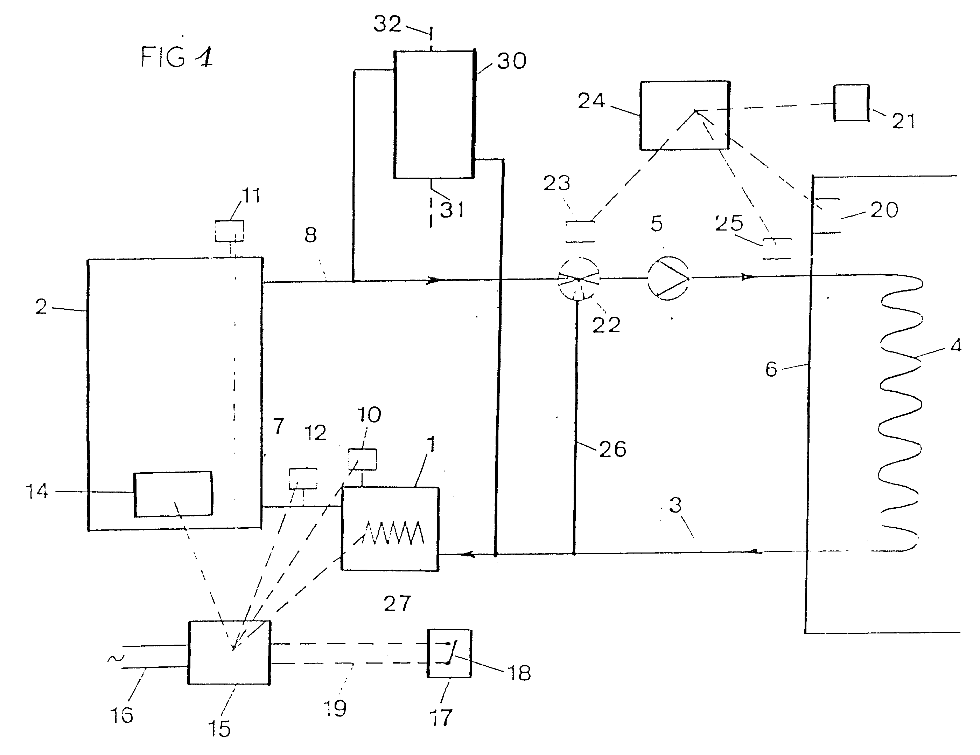

En se référant à la figure 1, l'installation comprend essentiellement :

— une chaudière électrique (1) à résistances (27) par exemple de 8 kW ;

— une seconde chaudière (2), dite chaudière deuxième énergie, placée en série avec (1) ayant une source d'énergie autre que l'électricité, par exemple liquide (fuel), gazeuse, avec son brûleur (14), ou à combustible solide ; cette chaudière deuxième énergie (2) peut avoir, par exemple, une puissance de 20 000 kcal/h.

La référence (3) désigne le circuit de chauffage central avec les radiateurs (4) et le circulateur (5) destinés à chauffer l'enceinte (6).

Le départ du circuit de chauffage est référencé repectivement (7) après la chaudière électrique (1) et (8) après la chaudière deuxième énergie (2).

Si dans l'exemple représenté à la figure 1, la chaudière électrique (1) est placée en amont de la chaudière deuxième énergie (2), on peut également placer cette chaudière électrique (1) en aval de (2).

Sur le départ de la chaudière électrique (1), on place un premier aquastat (10) pour détecter la température de sortie de l'eau de la chaudière électrique (1). Cet aquastat (10) permet d'enclencher et de déclencher le fonctionnement de cette chaudière électrique (2).

Un deuxième aquastat identique (11) est placé à la sortie de la chaudière deuxième énergie (2).

Ces aquastats se déclenchent à une certaine température et s'enclenchent à une autre température, l'écart entre ces deux températures étant en général de l'ordre de 5 °C.

Sur le circuit départ (7) reliant la chaudière électrique (1) à la chaudière (2), on place un troisième aquastat (12) analogue à (10-11), destiné à détecter la température seuil T.

Un coffret de régulation (15), incorporé ou non à la chaudière électrique (1) mais que l'on a représenté séparé pour la commodité des dessins, comprend :

— une liaison avec l'alimentation électrique (16), telle que notamment le secteur ;

— une liaison (19) avec le contact (18) du relais (17) du fournisseur de courant électrique ;

— ce coffret (15) est raccordé par des contacteurs au brûleur (14) de la chaudière (2) et aux résistances (27) de la chaudière électrique (1) ainsi qu'aux aquastats (10-11-12) ;

— (20) et (21) désignent des sondes classiques respectivement d'ambiance et extérieure.

Dans une forme de réalisation avantageuse et préférée, l'installation comporte une vanne (22) mélangeuse, motorisée par son moteur (23), commandé par un régulateur (24) asservi à la température extérieure (21) ou à la température ambiante (20), ainsi qu'à la température départ radiateur grâce à la sonde (25) placée à l'entrée de l'enceinte (6). Cette vanne (22) permet d'adapter la température du circuit secondaire (3-4-26) à une température différente de celle du circuit primaire (7-8-26).

Dans une variante utile, l'installation comporte également un ballon d'eau chaude sanitaire (30) relié au départ (8) et au retour (3) du circuit primaire. (31) désigne l'alimentation en eau froide et (32) le départ de l'eau chaude sanitaire.

Si le plus généralement, les deux chaudières sont séparées, elles peuvent être également incorporées dans un même bâti, ce qui conduit ainsi à une chaudière bi-énergie intégrée. Avantageusement, dans ce cas, le coffret de commande de régulation (15) est également intégré dans ce bâti.

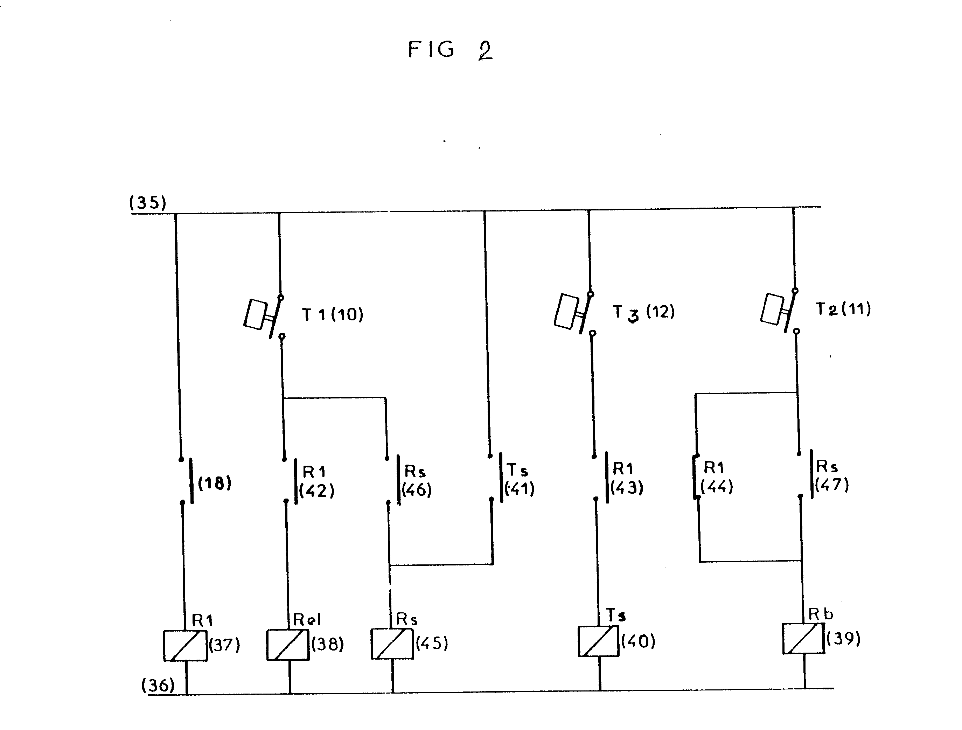

En se référant à la figure 2 qui montre le schéma électrique du circuit de commande, les références (35) et (36) désignent respectivement la ligne de phase et la ligne de neutre. (37) désigne un relais de commutation associé au contact (18) du relais (17).

Un contacteur (38) permet l'alimentation électrique des résistances (27) et un contacteur (39) permet d'enclencher le brûleur (14) de la chaudière (2). Le relais (40) comporte un moyen connu (horloge, temporisation) de réglage de la durée t prédéterminée, permettant à son contact interne (41) de se fermer à la fin de ce temps t, ce relais (40) étant lui-même excité au début de ce temps t. (42) et (43) désignent des contacts fermeture du relais (37). (44) désigne un contact ouverture du relais (37). (46) désigne un contact fermeture du relais (45) de simultanéité qui permet d'enclencher les deux chaudières (1) et (2) en même temps. (47) désigne un relais fermeture de ce même relais (45).

Comme déjà dit, les deux chaudières (1) et (2) fonctionnent automatiquement selon la tarification de l'énergie électrique et des besoins thermiques. La puissance de la chaudière (1) ne permet pas de couvrir tous ces besoins thermiques pendant les périodes où l'électricité est à tarification favorable. Enfin, la température de coupure de la chaudière deuxième énergie est inférieure à la température de coupure de la chaudière électrique (1). Par exemple, en utilisant le montage de l'installation représentée à la figure 1, on règle la température de coupure du fonctionnement de la chaudière électrique Tce par la sonde (10) à 85 °C et la température de mise en fonctionnement de la chaudière électrique Tee à 80 °C.

Par réglage de la sonde (11), on règle la température de coupure du fonctionnement de la chaudière deuxième énergie Tcf et la température de mise en fonctionnement de cette chaudière (2).

Par réglage de la sonde (12), on règle la température seuil T prédéterminée.

On règle par ailleurs la temporisation du contact (41) à une durée prédéterminée t, par exemple de vingt minutes. Cette durée t correspond en particulier dans une installation domestique au temps qui serait nécessaire pour réchauffer le ballon (30) après soutirage total ou partiel, sans avoir à faire appel à la chaudière deuxième énergie (2).

Pendant cette durée t, du fait de l'inertie thermique des bâtiments, le chauffage de l'enceinte (6) est temporairement réduit, sans que cela nuise pour autant au confort.

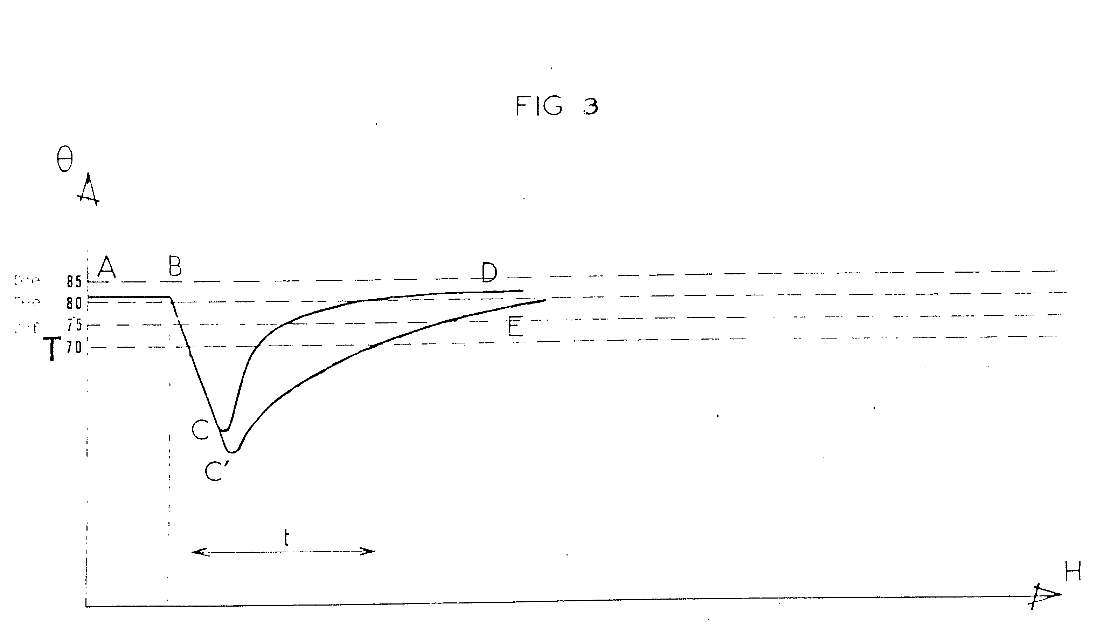

Sur les graphismes représentés aux figures 3, 4 et 5, on a reporté :

— en ordonnées, la température Θ en °C de l'eau du circuit de chauffage (3) au départ en (7) ou en (8) ;

— en abscisses, la chronologie (H) en unité de temps.

Lorsque l'on est en régime établi, c'est-à-dire lorsque les déperditions thermiques sont équilibrées avec la puissance fournie par la chaudière électrique (1), et que la température du circuit primaire de chauffage est stabilisée entre 80 et 85 °C, on est sur la portion de courbe sensiblement rectiligne AB. En revanche, lorsque l'on soutire de l'eau sanitaire, par exemple pour remplir une baignoire ou une douche, la demande calorifique instantanée est supérieure à la puissance susceptible d'être fournie par la chaudière électrique (1). On a donc une baisse très rapide de la température sur le départ (7) ou (8) qui se traduit par une baisse rapide de la courbe selon la portion BC. Ce besoin étant momentané, dans la solution traditionnelle, la chaudière deuxième énergie (2) se mettrait alors en route simultanément à la chaudière électrique (1) de sorte que l'on décrirait la portion de courbe CD. En revanche, si pendant cette durée prédéterminée t, la chaudière deuxième énergie (2) n'est pas mise en service, la chaudière électrique (1) permet, néanmoins après une légère baisse C', de remonter la température au seuil désiré selon la portion de courbe C'E, et ce, pendant ce temps t.

Compte tenu de l'inertie thermique des locaux (6), l'écart entre les deux solutions pour retrouver la température d'origine, n'est pas ressenti par les occupants.

Si donc, au bout d'un temps t prédéterminé, par exemple de vingt minutes, on est au-dessus de la valeur de la température seuil T, on ne fera pas appel à la chaudière deuxième énergie (2).

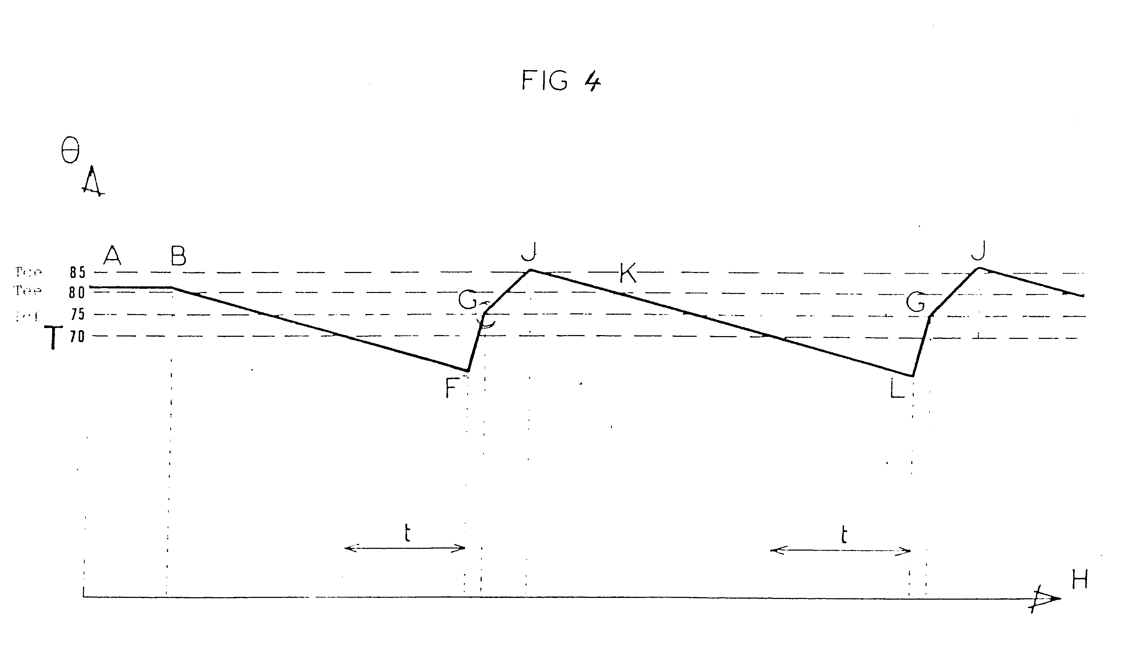

En revanche, lorsque l'on est en présence d'une perturbation plus importante, telle qu'une chute brutale de la température extérieure, les déperditions thermiques sont beaucoup plus importantes (voir figure 4). Dans ce cas, la chute de température est plus lente mais permanente (portion BF). Comme à la fin du temps t, la température sur la sonde de départ (11) sur le circuit (8) est inférieure à la température seuil T affichée à l'aquastat (12), la chaudière deuxième énergie (2) s'enclenche. Pour la compréhension des phénomènes, l'échelle chronologique (H) n'a pas été respectée rigoureusement. A ce moment, la température remonte jusqu'au point G grâce au fonctionnement simultané des deux chaudières (1) et (2). Lorsqu'on a atteint le point G, la chaudière deuxième énergie (2) s'arrête et comme l'on fonctionne seulement sur la chaudière électrique (1), la température continue néanmoins à monter du fait de l'inertie globale des deux chaudières (portion G-J) jusqu'à atteindre la température de coupure (85 °C) de la chaudière électrique (1). La température redescend de nouveau comme précédemment pour enclencher d'abord la chaudière électrique en K, puis la chaudière (2) en L après la temporisation t.

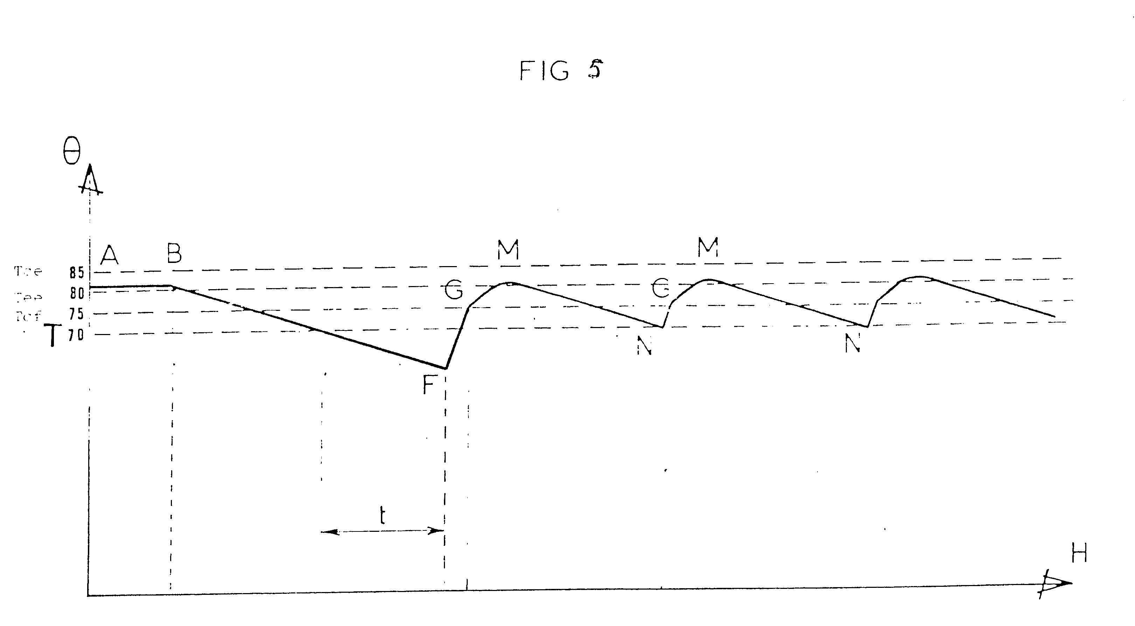

En cas de chute très brutale de la température telle qu'un froid intense (voir figure 5), le processus est identique jusqu'en G, mais la température de coupure (85 °C) de la chaudière électrique (1) ne peut pas être atteinte M et la chaudière deuxième énergie (2) est remise alors en fonctionnement à sa température d'enclenchement (70 °C) en N, sans prendre en compte la durée prédéterminée t.

Dans toutes les formes de réalisation, il est souhaitable que la température de l'eau du circuit de chauffage soit contrôlée en des points aussi proches que possible du départ (7-8) des chaudières (1) et (2).

On comprend aisément que plus l'écart entre la température de coupure du fonctionnement de la chaudière électrique et de la chaudière deuxième énergie est faible, plus grand sera le risque de voir le fonctionnement de la chaudière deuxième énergie entraîner une coupure inutile du fonctionnement de la chaudière électrique. Toutefois, la température de coupure du fonctionnement de la chaudière deuxième énergie doit être fixée à une valeur suffisante pour assurer un chauffage normal des locaux pendant les périodes les plus froides lorsque l'on fonctionne exclusivement sur cette chaudière deuxième énergie. Aussi, pour la plupart des climats tempérés, les valeurs indiquées respectivement de 85-80 et de 75-70 °C donneront généralement satisfaction.

En outre, comme déjà dit, il est indispensable que la température seuil prédéterminée T soit inférieure à la température de mise en fonctionnement de la chaudière électrique.

Ainsi l'invention permet la prise en compte du facteur temps par le biais d'une durée prédéterminée, à partir du moment où la température de l'eau dans la chaudière électrique (1) au départ (7) devient au plus égale à la valeur seuil T. Si à la fin de cette durée t, la température en (7) et (8) est toujours égale ou inférieure à cette température seuil T, la chaudière deuxième énergie est mise alors en fonctionnement simultané à la chaudière électrique (1). En revanche, si cette température est remontée au-dessus de cette température seuil T, cela indique que la puissance de la chaudière électrique (1) peut alors faire face aux besoins thermiques et ainsi que cette chaudière électrique (1) peut continuer à fonctionner seule.

Si on a mis en service la chaudière (2), le fonctionnement de celle-ci sera arrêté, lorsque à son départ (8), la température de l'eau atteindra la température provoquant la coupure du fonctionnement de cette chaudière deuxième énergie (2).

A partir de ce moment, deux situations sont alors possibles. Si la puissance de la chaudière électrique (1) est suffisante pour faire face aux besoins thermiques, la température au départ (7) restera soit identique à ce qu'elle était au moment où la température de coupure de la chaudière deuxième énergie (2) aura été atteinte, soit elle progressera et atteindra la valeur égale à la température de coupure de la chaudière électrique arrêtant ainsi celle-ci (figure 4). En revanche, si cette puissance n'est pas suffisante, la température de l'eau au départ (7) va à nouveau baisser. Ainsi, après un arrêt de la chaudière deuxième énergie (2), la temporisation ne sera reprise en compte qu'après la première coupure du fonctionnement de la chaudière électrique (1). Tant que cette coupure ne sera pas intervenue, la temporisation ne pourra pas être remise en fonctionnement et la constante de temps t reprise en compte (figure 5).

Le procédé et l'installation selon l'invention présentent de nombreux avantages par rapport à deux simples chaudières en série, l'une électrique, l'autre fonctionnant avec une autre énergie. On peut citer :

— l'économie de fonctionnement, puisque la chaudière deuxième énergie n'est pas remise en fonctionnement de manière intempestive ;

— l'économie dans l'installation par l'utilisation d'une chaudière électrique de puissance réduite et la possibilité de souscrire un abonnement tarifaire moindre ;

— la possibilité de fonctionner en simultané même en période de grand froid et sur tarification favorable ;

— la possibilité d'assurer en période à tarification favorable la production d'eau chaude sanitaire par la chaudière électrique sans avoir à souscrire de puissance électrique supplémentaire par rapport à celle nécessaire aux seuls besoins du chauffage ;

— la possibilité de ne pas enclencher la deuxième énergie lorsque l'on enregistre une demande thermique exceptionnelle brusque et de courte durée.

**Revendications**

1. Procédé de chauffage central bi-énergie, dont le circuit (3) comporte des radiateurs (4), un circulateur (5), un thermostat d'ambiance (20) et une vanne de mélange (22), du type dans lequel on utilise deux chaudières (1, 2) reliées en série au circuit (3) de chauffage central, à savoir :

une chaudière électrique (1) équipée de résistances électriques (27) et d'un premier aquastat (10) qui provoque, pendant les périodes à tarification favorable de l'électricité, la mise en service (ou l'arrêt) des résistances (27) pour des températures de l'eau du circuit de chauffage Tee (pour l'enclenchement) et Tce (pour l'arrêt) ;

une chaudière (2) fonctionnant sur une énergie différente de l'électricité, dite chaudière deuxième énergie, équipée d'un brûleur (14) et d'un second aquastat (11) qui limite la température de l'eau au départ de cette chaudière (2) deuxième énergie, et qui, pendant les périodes à tarification élevée de l'électricité où cette chaudière (2) fonctionne seule, provoque la mise en service (ou l'arrêt) du brûleur (14) de cette chaudière (2) ;

et dans lequel ces deux chaudières (1) et (2) sont pilotées par un coffret électrique de commande (15) raccordé auxdits aquastats (10, 11), au brûleur (14), aux résistances (27), au circulateur (5) et à un système (17, 18) de détection du changement de tarification de l'énergie électrique et qui comprend un équipement permettant de définir et de prendre en considération une constante de temps t prédéterminée, procédé dans lequel :

d'une part, la mise en fonctionnement de l'une ou de l'autre de ces deux chaudières (1) et (2) est effectuée automatiquement en fonction de la tarification de l'énergie électrique détectée par le système (17, 18) et par l'évolution des besoins thermiques du circuit de chauffage détectée par lesdits aquastats (10, 11) en fonction de la température de l'eau du circuit de chauffage (3) ;

d'autre part, la puissance de la chaudière électrique (1) ne permet pas de couvrir tous les besoins thermiques pendant la période où l'électricité est à tarification favorable, alors que la puissance de la chaudière deuxième énergie (2) est à même de couvrir la totalité des besoins thermiques pendant les jours les plus froids ;

et enfin, on enclenche, ou non, la chaudière deuxième énergie (2) qu'après ladite durée prédéterminée t,
caractérisé en ce que pendant les périodes à tarification favorable de l'électricité :

tout d'abord, on enclenche la chaudière deuxième énergie (2) ensemble avec la chaudière électrique (1) lorsque, après cette durée prédéterminée t, la température de l'eau du circuit de chauffage détectée par un troisième aquastat (12) situé sur le départ (7) de la chaudière électrique (1) agissant sur le brûleur (14) de la chaudière deuxième énergie (2) par le biais du coffret (15), est inférieure ou égale à une température seuil prédéterminée T, elle-même inférieure :

d'une part, à la température de l'eau du circuit de chauffage Tee provoquant l'enclenchement des résistances (27) de la chaudière électrique (1) détectée par le premier aquastat (10),

d'autre part, à la température de l'eau du circuit de chauffage provoquant l'enclenchement de la chaudière deuxième énergie (2) détectée par le deuxième aquastat (11) ;

puis, à partir du moment (F) où cette chaudière deuxième énergie (2) a été ainsi mise en service, on arrête le brûleur (14) de cette chaudière deuxième énergie (2) par le biais du coffret (15), lorsque le troisième aquastat (12) détecte au départ (7) de la chaudière électrique (1) une température de l'eau Tcf pour laquelle il provoque l'arrêt du brûleur (14) de la chaudière deuxième énergie (2), cette température Tcf étant inférieure :

à la température de l'eau Tce provoquant l'arrêt des résistances (27) de la chaudière électrique (1) détectée par le premier aquastat (10),

et à la température de l'eau provoquant l'arrêt du brûleur (14) de la chaudière deuxième énergie (2) détectée par le second aquastat (11) ;

puis, si après que cette chaudière deuxième énergie (2) ait été ainsi arrêtée (G), la température de l'eau redescend (M) sans qu'il y ait eu au préalable arrêt de la chaudière électrique (2), on remet à nouveau en route par le biais du troisième aquastat (12) et du coffret (15) la chaudière deuxième énergie (2) lorsque la température seuil T est atteinte (N) sans prendre en compte ladite durée prédéterminée t ;

enfin, toujours lorsque l'on est sur tarification électrique favorable, lorsque la chaudière deuxième énergie (2), après avoir été remise en service (F) ou (N) puis arrêtée (G), lorsque la température de l'eau au départ de la chaudière électrique (1) atteint sa température de coupure Tce (J), le premier aquastat (10) provoque l'arrêt du fonctionnement des résistances (27), à partir de cette situation et de ce moment, la chaudière deuxième énergie (2) ne peut plus être remise en service par le biais du coffret (15) lorsque la température seuil T est atteinte que si après la durée prédéterminée t la température de l'eau du circuit de chauffage au droit du troisième aquastat (12) est toujours inférieure ou égale à cette température seuil T.

2. Installation de chauffage central bi-énergie pour la mise en œuvre du procédé selon la revendication 1, du type comprenant :

un circuit de chauffage central (3) proprement dit avec ses radiateurs (4), un circulateur (5), un thermostat d'ambiance (20) et une vanne de mélange (22) ;

une chaudière électrique (1) équipée de résistances électriques (27) et d'un premier aquastat (10) qui, pendant la période à tarification favorable de l'électricité, provoque la mise en service ou l'arrêt des résistances (27) de cette chaudière électrique (1) pour des températures de l'eau du circuit de chauffage Tee (enclenchement) ou Tce (coupure) ;

une chaudière deuxième énergie (2) raccordée (7) en série à la chaudière électrique (1), équipée d'un brûleur (14) et d'un deuxième aquastat (11) qui limite la température de l'eau au départ de cette chaudière (2) deuxième énergie, et qui, pendant les périodes à tarification élevée de l'électricité, provoque la mise en service ou l'arrêt du brûleur (14) de cette chaudière deuxième énergie (2) ;

un coffret électrique (15) raccordé aux premier et deuxième aquastats (10, 11), aux résistances (27), au brûleur (14), au circulateur (5) et à un système (17, 18) de détection du changement de tarification de l'énergie électrique, ce coffret comportant des moyens aptes :

à fixer une durée prédéterminée t,

à détecter, à la fin de cette durée prédéterminée t, si au départ (7) de la chaudière électrique (1), on a atteint une température inférieure ou égale à la température seuil T prédéterminée,
caractérisée :

— d'une part, en ce qu'elle comporte un troisième aquastat (12), raccordé au coffret (15), disposé sur le départ (7) de la chaudière électrique (1) pour détecter :

tout d'abord, une température seuil T de l'eau du circuit de chauffage de mise en œuvre du brûleur (14) de la chaudière deuxième énergie (2) inférieure :

d'une part, à la température d'arrêt Tce des résistances (27) de la chaudière électrique (1) détectée par le premier aquastat (10) de cette chaudière (1),

d'autre part, à la température de l'eau provoquant l'arrêt du brûleur (14) de la chaudière deuxième énergie (2) détectée par son aquastat (11) ;

et également une température de l'eau Tcf provoquant l'arrêt du brûleur (14) de la chaudière deuxième énergie (2) :

supérieure de quelques degrés à la température seuil T, mais inférieure à la température de l'eau Tce provoquant l'arrêt des résistances (27) de la chaudière électrique (1) détectée par le premier aquastat (10) de la chaudière électrique (1),

et également inférieure à la température de l'eau provoquant l'arrêt du brûleur (14) de la chaudière deuxième énergie (2) détectée par son aquastat (11) ;

— et d'autre part, en ce que ledit coffret (15) est alimenté électriquement en permanence par les fils de phase (35) et neutre (36) et comporte :

un contact (18) commandé par le relais (17) installé sur le tableau du fournisseur de courant électrique, ouvert en tarification défavorable de l'électricité et fermé en tarification favorable ;

un relais (37) mis sous tension par le contact (18) pendant la période à tarification favorable de l'électricité, dont les contacts :

(42) et (43) en position fermée, permettent la mise sous tension des résistances (27) de la chaudière électrique (1) lorsque le premier aquastat T1 (10) est fermé (contact 42) et de temporisation Ts (40) lorsque le contact du troisième aquastat T3 (12) est fermé,

(44), en position ouverte permettent l'alimentation du relais Rb (39) du brûleur (14) de la chaudière deuxième énergie (2) lorsque le contact du deuxième aquastat (11) est fermé ;

un relais temporisé (40) qui, en période à tarification favorable de l'électricité, est mis sous tension lorsque le contact du troisième aquastat T3 (12) est fermé et qui provoque après la durée t, la fermeture de son contact Ts (41) mettant ainsi sous tension le relais Rs (45) lorsque le contact T1 (10) du premier aquastat (10) est fermé ;

un relais (45) de simultanéité qui lors de sa mise sous tension provoque la fermeture de son contact Rs (47) permettant ainsi la mise sous tension du relais Rb (39) du brûleur (14) de la chaudière deuxième énergie (2) lorsque le contact T2 (11) du deuxième aquastat (11) est fermé ;

un relais (38) qui met sous tension les résistances (27) de la chaudière électrique (1) lorsque simultanément les contacts (42) du relais (37) et (10) du premier aquastat (10) sont fermés.

**Claims**

1. Process for bi-energetic central heating, the circuit (3) of which comprises radiators (4), a circulating pump (5), a room thermostat (20) and a mixing valve (22), of the type in which two boilers (1, 2) connected in series to the central-heating circuit (3) are used, namely :

an electrical boiler (1) equipped with electrical resistors (27) and with a first aquastat (10) which, during the periods with a favourable electricity tariff level, causes the activation (or cut-out) of the resistors (27) for temperatures of the water of the heating circuit Tee (for activation) and Tce (for cut-out) ;

a boiler (2) operating on an energy different from electricity, called a second-energy boiler, equipped with a burner (14) and with a second aquastat (11) which limits the temperature of the water leaving this second-energy boiler (2) and which, during the periods with a high electricity tariff level when this boiler (2) operates alone, causes the activation (or cut-out) of the burner (14) of this boiler (2) ;

and in which these two boilers (1) and (2) are controlled by means of an electrical control box (15) connected to the said aquastats (10, 11), to the burner (14), to the resistors (27), to the circulating pump (5) and to a system (17, 18) which detects the change in tariff level of the electrical energy and which has a device making it possible to define and take into account a predetermined time constant t, in which process :

on the one hand, one or other of these two boilers (1) and (2) is activated automatically as a function of the tariff level of the electrical energy detected by the system (17, 18) and as a result of the change in the thermal demands made on the heating circuit which is detected by the said aquastats (10, 11) as a function of the temperature of the water of the heating circuit (3) ;

on the other hand, the power of the electrical boiler (1) does not make it possible to meet all the thermal demands during the period when the electricity is at a favourable tariff level, whereas the power of the second-energy boiler (2) is capable of meeting all the thermal demands on the coldest days,

and finally, the second-energy boiler (2) is activated or not only after the said predetermined time t, characterized in that, during the periods with a favourable electricity tariff level :

first of all, the second-energy boiler (2) is activated together with the electrical boiler (1) when, after this predetermined time t, the temperature of the water of the heating circuit detected by a third aquastat (12) located on the outlet line (7) of the electrical boiler (1) acting on the burner (14) of the second-energy boiler (2) via the box (15) is below or equal to a predetermined threshold temperature T, itself below :

on the one hand, the temperature of the water of the heating circuit Tee, causing the activation of the resistors (27) of the electrical boiler (1), detected by the first aquastat (10), and,

on the other hand, the temperature of the water of the heating circuit, causing the activation of the second-energy boiler (2), detected by the second aquastat (11),

then, from the moment (F) when this second-energy boiler (2) has thus been activated, the burner (14) of this second-energy boiler (2) is cut out via the box (15), when the third aquastat (12) detects, on the outlet line (7) of the electrical boiler (1), a water temperature Tcf, at which it causes the cut-out of the burner (14) of the second-energy boiler (2), this temperature Tct being below :

the temperature of the water Tce, causing the cut out of the resistors (27) of the electrical boiler (1), detected by the first aquastat (10),

and the temperature of the water, causing the cut out of the burner (14) of the second-energy boiler (2), detected by the second aquastat (11) ;

then, if, after this second-energy boiler (2) has thus been cut out (G), the temperature of the water falls again (M), without the electrical boiler (2) having previously been cut out, the second-energy boiler (2) is reactivated via the third aquastat (12) and the box (15), when the threshold temperature T is reached (N), without taking the said predetermined time t into account,

finally, still in the period with a favourable electricity tariff level, when the second-energy boiler (2), after being reactivated (F) or (N) and then cut out (G), when the temperature of the water at the outlet of the electrical boiler (1) reaches its cut-off temperature Tce (J), the first aquastat (10) causes the operational cut-out of the resistors (27), as soon as this situation arises and from this moment, the second-energy boiler (2) can now be reactivated via the box (15) when the threshold temperature T is reached, only if, after the predetermined time t, the temperature of the water of the heating circuit in line with the third aquastat (12) is still below or equal to this threshold temperature T.

2. Bi-energetic central heating installation for carrying out the process according to Claim 1, of the type comprising :

an actual central-heating circuit (3) with its radiators (4), a circulating pump (5), a room thermostat (20) and a mixing valve (22) ;

an electrical boiler (1) equipped with electrical resistors (27) and with a first aquastat (10) which, during the period with a favourable electricity tariff level, causes the activation or cut-out of the resistors (27) of this electrical boiler (1) for temperatures of the water of the heating circuit Tee (activation) or Tce (cut-out) ;

a second-energy boiler (2) connected (7) in series to the electrical boiler (1) and equipped with a burner (14) and with a second aquastat (11) which limits the temperature of the water at the outlet of this second-energy boiler (2) and which, during the periods with a high electricity tariff level, causes the activation or cut-out of the burner (14) of this second-energy boiler (2) ;

an electrical box (15) connected to the first and second aquastats (10, 11), to the resistors (27), to the burner (14), to the circulating pump (5) and to a system (17, 18) for detecting the change in tariff level of the electrical energy, this box having means designed to :

set a predetermined time t,

detect, at the end of this predetermined time t, whether a temperature below or equal to the predetermined threshold temperature T has been reached at the outlet line (7) of the electrical boiler (1),

characterized :

— on the one hand, in that it has a third aquastat (12) connected to the box (15) and arranged on the outlet line (7) of the electrical boiler (1) for detecting :

first of all, a threshold temperature T of the water of the heating circuit for activating the burner (14) of the second-energy boiler (2) and below :

on the one hand, the cut-out temperature Tce of the resistors (27) of the electrical boiler (1) detected by the first aquastat (10) of this boiler (1), and

on the other hand, the temperature of the water, causing the cut-out of the burner (14) of the second-energy boiler (2), detected by its aquastat (11),

and also a water temperature Tcf causing the cut-out of the burner (14) of the second-energy boiler (2) and :

a few degrees higher than the threshold temperature T, but below the water temperature Tce, causing the cut-out of the resistors (27) of the electrical boiler (1), detected by the first aquastat (10) of the electrical boiler (1),

and also below the water temperature, causing the cut-out of the burner (14) of the second-energy boiler (2), detected by its aquastat (11),

— and on the other hand in that the said box (15) is permanently supplied with electricity by means of the phase wire and neutral wire (36) and contains :

a contact (18) controlled by the relay (17) mounted on the board of the electrical current supplier and open in a period with an unfavourable electricity tariff level and closed in a period with a favourable electricity tariff level ;

a relay (37) energized by the contact (18) during the period with a favourable electricity tariff level and of which the contacts :

(42) and (43) in the closed position make it possible to activate the resistors (27) of the electrical boiler (1), when the first aquastat T1 (10) is closed (contact 42), and the timing relay Ts (40), when the contact of the third aquastat T3 (12) is closed,

(44) in the open position make it possible to energize the relay Rb (39) of the burner (14) of the second-energy boiler (2) when the contact of the second aquastat (11) is closed ;

a timing relay (40) which, in the period with a favourable electricity tariff level, is energized when the contact of the third aquastat T3 (12) is closed and which, after the time t, causes the closing of its contact Ts (41), thus energizing the relay Rs (45), when the contact T1 (10) of the first aquastat (10) is closed ;

a simultaneous relay (45) which, when energized, causes the closing of its contact Rs (47), thus making it possible to energize the relay Rb (39) of the burner (14) of the second-energy boiler (2), when the contact T2 (11) of the second aquastat (11) is closed ;

a relay (38) which activates the resistors (27) of the electrical boiler (1) when the contacts (42) of the relay (37) and (10) of the first aquastat (10) are closed simultaneously.

## Patentansprüche

1. Verfahren zum Betreiben einer bivalent arbeitenden Zentralheizung mit einem Kreislauf (3), der Heizkörper (4), eine Umwälzpumpe (5), einen Raumthermostaten (20) und ein Mischventil (22) aufweist, von einer Art, bei der man zwei in Serie mit dem Kreislauf (3) der Zentralheizung geschaltete Heizkessel (1, 2) verwendet, nämlich :

einen elektrisch betriebenen Heizkessel (1), der mit elektrischen Widerständen (27) und einem ersten Aquastaten (10) ausgerüstet ist, der in Zeitabschnitten vorteilhafter Stromtarife das Einschalten (oder das Abschalten) der Widerstände (27) für die Wassertemperatur des Heizkreislaufes Tee (für das Einschalten) und Tce (für das Abschalten) auslöst ;

einen Heizkessel (2), der mit einer nichtelektrischen Energie arbeitet, ein sogenannter mit einem zweiten Energieträger betriebener Heizkessel, wobei dieser einen Brenner (14) und einen zweiten Aquastaten (11), der die Wassertemperatur am Austritt aus dem mit dem zweiten Energieträger betriebenen Heizkessel (2) begrenzt, aufweist, und der in Zeitabschnitten erhöhter Stromtarife, in denen dieser Heizkessel (2) alleine arbeitet, das Einschalten (oder das Abschalten) des Brenners (14) dieses Heizkessels (2) auslöst ;

und bei dem diese beiden Heizkessel (1) und (2) von einem elektrischen Bedienungsschaltschrank (15) aus gesteuert werden, der mit den genannten Aquastaten (10, 11), dem Brenner (14), den Widerständen (27), der Umwälzpumpe (5) und einem System (17, 18) verbunden ist, das die Veränderung der Stromtarife erfaßt und das eine Einrichtung aufweist, die es erlaubt, eine vorbestimmte Zeitkonstante t zu definieren und zu berücksichtigen,
wobei bei diesem Verfahren :

einerseits in Abhängigkeit von dem durch das System (17, 18) erfaßten Stromtarif und entsprechend dem Verlauf des durch die genannten Aquastaten (10, 11) in Abhängigkeit von der Wassertemperatur des Heizkreislaufes (3) erfaßten thermischen Bedarfs des Heizkreislaufs der Betrieb des einen oder des anderen dieser beiden Heizkessel (1) und (2) automatisch aufgenommen wird ;

andererseits die Leistung des elektrisch betriebenen Heizkessels (1) es nicht erlaubt, im Zeitabschnitt des vorteilhaften Stromtarifs den gesamten thermischen Bedarf zu decken, während die Leistung des mit einem zweiten Energieträger betriebenen Heizkessels (2) im Stande ist, den gesamten thermischen Bedarf auch an den kältesten Tagen zu decken ;

man schließlich erst nach der basagten vorbestimmten Zeitdauer t den mit dem zweiten Energieträger betriebenen Heizkessel (2) einschaltet oder nicht einschaltet,
dadurch gekennzeichnet, daß in Zeitabschnitten vorteilhafter Stromtarife :

man zu allererst den mit dem zweiten Energieträger betriebenen Heizkessel (2) gemeinsam mit dem elektrisch betriebenen Heizkessel (1) einschaltet, wenn nach der vorbestimmten Zeitdauer t, die, mittels eines dritten am Austritt (7) des elektrisch betriebenen Heizkessels (1) installierten Aquastaten (12), der über den Bedienungsschaltschranks (15) auf den Brenner (14) des mit dem zweiten Energieträger betriebenen Heizkessels (2) einwirkt, erfaßte Wassertemperatur des Heizkreislaufs niedriger oder gleich einer vorbestimmten Temperaturschwelle T ist, die wiederum niedriger ist :

einerseits als die vom ersten Aquastaten (10) erfaßte Wassertemperatur des Heizkreislaufs Tee, die das Einschalten der Widerstände (27) des elektrisch betriebenen Heizkessels (1) auslöst,

andererseits als die von dem zweiten Aquastaten (11) erfaßte Wassertemperatur des Heizkreislaufs, die das Einschalten des mit dem zweiten Energieträger betriebenen Heizkessels (2) auslöst ;

dann, von dem Zeitpunkt (F) an, zu dem der mit dem zweiten Energieträger betriebene Heizkessel (2) so in Betrieb genommen worden ist, man mittels des Bedienungsschaltschranks (15) den Brenner (14) des mit dem zweiten Energieträger betriebenen Heizkessels (2) abschaltet, wenn der dritte Aquastat (12) am Austritt (7) des elektrisch betriebenen Heizkessels (1) eine Wassertemperatur Tcf erfaßt, bei der er das Abschalten des Brenners (14) des mit dem zweiten Energieträger betriebenen Heizkessels (2) veranlaßt, wobei diese Temperatur Tcf niedriger ist als :

die von dem ersten Aquastaten (10) erfaßte Wassertemperatur Tce, die das Abschalten der Widerstände (27) des elektrisch betriebenen Heizkessels (1) bewirkt,

und die von dem zweiten Aquastaten (11) erfaßte Wassertemperatur, die das Abschalten des Brenners (14) des mit dem zweiten Energieträger betriebenen Heizkessels (2) bewirkt ;

dann, wenn, nachdem der mit dem zweiten Energieträger betriebene Heizkessel (2) abgestellt worden ist (G), die Wassertemperatur, ohne daß der elektrisch betriebene Heizkessel (2) vorher abgeschaltet gewesen wäre, wieder abfällt (M), man erneut mittels des dritten Aquastaten (12) und des Schaltschranks (15) den mit dem zweiten Energieträger betriebenen Heizkessel (2) in Betrieb nimmt, wenn die Temperaturschwelle T ohne Berücksichtigung der besagten vorbestimmten Zeitspanne t erreicht ist (N) ;

schließlich, immer dann, wenn man sich in einer vorteilhaften Stromtarifzone befindet, wenn der mit dem zweiten Energieträger betriebene Heizkessel (2) bei (F) oder (N) eingeschaltet und bei (G) abgeschaltet wurde, wenn die Wassertemperatur am Austritt des elektrisch betriebenen Heizkessels (1) ihren Temperaturumkehrpunkt Tce (J) erreicht, der erste Aquastat (10) das Abschalten der Widerstände (27) auslöst, wobei von dieser Lage und von diesem Zeitpunkt an der mit dem zweiten Energieträger betriebene Heizkessel (2) nicht mehr durch den Bedienungsschaltschrank (15) eingeschaltet werden kann, wenn die Temperaturschwelle T erreicht ist, sondern erst, wenn nach der vorbestimmten Zeitspanne t die Wassertemperatur des Heizkreislaufs am Ort des dritten Aquastaten (12) immer noch niedriger oder gleich dieser Temperaturschwelle T ist.

2. Bivalent arbeitende Zentralheizung zur Durchführung eines Verfahrens nach Anspruch 1, die aufweist :

einen Kreislauf (3) einer Zentralheizung, genauer gesagt, mit ihren Heizkörpern (4), einer Umwälzpumpe (5), einem Umgebungsthermostaten (20) und einem Mischventil (22) ;

einen elektrisch betriebenen Heizkessel (1), der mit elektrischen Widerständen (27) und mit einem ersten Aquastaten (10) bestückt ist, der im Zeitabschnitt eines vorteilhaften Stromtarifs für die Wassertemperaturen Tee (Einschaltung) oder Tce (Abschaltung) des Heizkreislaufs die Widerstände (27) dieses elektrisch betriebenen Heizkessels (1) ein- oder abschaltet ;

einen, in Serienschaltung mit dem elektrisch betriebenen Heizkessel (1) angeordneten, mit einem zweiten Energieträger betriebenen Heizkessel (2), der einen Brenner (14) und einen zweiten Aquastaten (11) aufweist, der die Wassertemperatur am Austritt dieses mit dem zweiten Energieträger betriebenen Heizkessels (2) begrenzt, und der in Zeitabschnitten erhöhter Stromtarife das Einschalten oder das Abschalten des Brenners (14) des mit dem zweiten Energieträger betriebenen Heizkessels (2) auslöst ;

einen elektrischen Bedienungsschaltschrank (15), der mit dem ersten und zweiten Aquastaten (10, 11) den Widerständen (27), dem Brenner (14), der Umwälzpumpe (5) und mit einem System (17, 18) verbunden ist, das die Veränderung der Stromtarife erfaßt, wobei dieser Schaltschrank geeignete Mittel aufweist :

zum Festsetzen einer vorbestimmten Zeitspanne t

zum Erfassen, ob man am Austritt (7) des elektrisch betriebenen Heizkessels (1) nach dieser vorbestimmten Zeitspanne t eine niedrigere oder eine der vorbestimmten Temperaturschwelle T gleiche Temperatur erreicht hat, dadurch gekennzeichnet, daß

— sie einerseits einen dritten mit dem Schaltschrank (15) verbundenen Aquastaten (12) aufweist, der am Austritt (7) des elektrisch betriebenen Heizkessels (1) vorgesehen ist, zum Erfassen :

anfangs einer Temperaturschwelle T des Wassers des Heizkreislaufs für das Ingangsetzen des Brenners (14) des mit dem zweiten Energieträger betriebenen Heizkessels (2), die niedriger ist :

einerseits als die Abschalttemperatur Tce der Widerstände (27) des elektrisch betriebenen Heizkessels (1), die durch den ersten Aquastaten (10) dieses Heizkessels (1) erfaßt wird,

andererseits als die Temperatur des Wassers, die das Abschalten des Brenners (14) des mit dem zweiten Energieträger betriebenen Heizkessels (2) auslöst und die durch seinen Aquastaten (11) erfaßt wird ;

und ebenfalls einer Wassertemperatur Tcf, die das Abschalten des Brenners (14) des mit dem zweite Energieträger betriebenen Heizkessels (2) auslöst :

die einige Grade über der Temperaturschwelle T liegt, aber niedriger als die Wassertemperatur Tce, die von dem ersten Aquastaten (10) des elektrisch betriebenen Heizkessels (1) erfaßt wird, und die das Abschalten der Widerstände (27) des elektrisch betriebenen Heizkessels (1) auslöst,

und ebenfalls niedriger als die Wassertemperatur ist, die, erfaßt von seinem Aquastaten (11), das Abschalten des Brenners (14) des mit dem zweiten Energieträger betriebenen Heitzkessels (2) auslöst ;

— und daß andererseits der genannte Schaltschrank (15) ständig durch eine Phasenleitung (35) und einem Nulleiter (36) betrieben ist und aufweist :

einen Kontakt (18), der durch das Relais (17) betätigt wird, das auf der Schalttafel des Stromlieferanten befestigt ist, und der bei ungünstigen Stromtarifen geöffnet und bei vorteilhaften Tarifen geschlossen ist ;

ein Relais (37), das in Zeitabschnitten vorteilhafter Stromtarife unter Spannung steht und dessen Kontakte :

(42) und (43) im geschlossenen Zustand die Unterspannungssetzung der Widerstände (27) des elektrisch betriebenen Heizkessels (1) erlauben, wenn der erste Aquastat T1 (10) geschlossen ist (Kontakt 42) und eine Zeitverzögerung Ts (40), wenn der Kontakt des dritten Aquastaten T3 (12) geschlossen ist,

(44) in offener Stellung die Speisung des Relais Rb (39) des Brenners (14) des mit dem zweiten Energieträger betriebenen Heizkessels (2) erlauben, wenn der Kontakt des zweiten Aquastaten (11) geschlossen ist ;

ein Verzögerungsrelais (40), das in Zeitabschnitten der vorteilhaften Stromtarife unter Spannung gesetzt ist, wenn der Kontakt des dritten Aquastaten T3 (12) geschlossen ist und das nach der Zeitspanne t ein Schließen des Kontakts Ts (41) auslöst, und so das Relais Rs (45) unter Spannung setzt, wenn der Kontakt T1 (10) des ersten Aquastaten (10) geschlossen ist ;

ein Relais (45), das beim Anziehen gleichzeitig das Schließen seines Kontaktes Rs (47) und das Anziehen des Relais Rb (39) des Brenners (14) des mit dem zweiten Energieträger betriebenen Heizkessels (2) bewirkt, wenn der Kontakt T2 (11) des zweiten Aquastaten (11) geschlossen ist ;

ein Relais (38), das die Widerstände (27) des elektrisch betriebenen Heizkessels (1) unter Spannung setzt, wenn die Kontakte (42) des Relais (37) und (10) des ersten Aquastaten (10) gleichzeitig geschlossen sind.

FIG 1

FIG 2

FIG 3

FIG 4

FIG 5